# EUROPÄISCHE PATENTANMELDUNG

(11) **EP 2 273 810 A2**
(43) Veröffentlichungstag der Anmeldung: **12.01.2011**
(21) Anmeldenummer: 10175320.0
(22) Anmeldetag: 29.11.1999
(51) Int. Cl.: H04W 12/06, H04W 4/02

(54) **Verfahren zur Identifizierung einer mobilen Station**

(30) Priorität: 30.11.1998 DE 19855142
(62) Teilanmeldung aus: 99123658.9
(71) Anmelder: IPCom GmbH & Co. KG, 82049 Pullach (DE)
(72) Erfinder: Hans, Martin, 31141, Hildesheim (DE); Laumen, Josef, 31141, Hildesheim (DE)
(74) Vertreter: Molnia, David

(57) **Zusammenfassung**

Es wird ein Verfahren zur Identifizierung mindestens einer an mindestens einem vorgegebenen Dienst teilnehmenden mobilen Station (10, 15, 20, 25), insbesondere eines Mobilfunkgerätes, vorgeschlagen. Die Identifizierung ist dabei in einem beliebigen vorgebbaren geographischen Gebiet (30) möglich. Die mobile Station (10, 15, 20, 25) weist mindestens eine vorgegebene Eigenschaft auf. In einem ersten Schritt (100) werden das geographische Gebiet (30), der mindestens einen Dienst und die mindestens eine Eigenschaft vorgegeben. In einem zweiten Schritt (200) werden sämtliche an den mindestens einen vorgegebenen Dienst teilnehmenden mobilen Stationen (10, 15, 20) in dem geographischen Gebiet (30) über ein Telekommunikationsnetz (35) ermittelt. In einem dritten Schritt (300) wird für jede der ermittelten mobilen Stationen (10, 15, 20) überprüft, ob sie die mindestens eine vorgegebene Eigenschaft aufweisen. In einem vierten Schritt (400) wird nur dann eine ermittelte mobile Station (15) signalisiert, wenn sie die mindestens eine vorgegebene Eigenschaft aufweist.

## Beschreibung

### Stand der Technik

Die Erfindung geht von einem Verfahren zur Identifizierung mindestens einer mobilen Station nach der Gattung des Hauptanspruchs aus.

Aus dem Artikel "Flirten, bis die Batterien versagen" auf Seite 14 der Frankfurter Allgemeinen Zeitung vom 18. Juni 1998 sind sogenannte "Lovegetys" bekannt, bei denen sich drei verschiedene Eigenschaften, je nach gewünschter Komrnunikationsform einstellen lassen. Begegnen sich weibliche und männliche Lovegetys gleicher eingestellter Eigenschaft innerhalb einer 5-Meter-Zone, beginnen sie, so beide auf Empfang stehen, schrill zu piepsen.

### Vorteile der Erfindung

Das erfindungsgemäße Verfahren mit den Merkmalen des Hauptanspruchs hat demgegenüber den Vorteil, daß in einem ersten Schritt ein geographisches Gebiet, mindestens ein Dienst und mindestens eine Eigenschaft vorgegeben werden und daß in einem zweiten Schritt sämtliche an dem mindestens einen vorgegebenen Dienst teilnehmenden mobilen Stationen in dem geographischen Gebiet über ein Telekommunikationsnetz ermittelt werden. Auf diese Weise kann eine Suche nach an dem mindestens einen vorgegebenen Dienst teilnehmenden mobilen Stationen mit der mindestens einen vorgegebenen Eigenschaft auf ein beliebiges, vom Telekommunikationsnetz erreichbares Gebiet ausgedehnt und somit an die Bedürfnisse eines solche mobile Stationen suchenden Teilnehmers des Telekommunikationsnetzes angepaßt werden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß eine in dem geographischen Gebiet ermittelte mobile Station mit der mindestens einen vorgegebenen Eigenschaft an einen Teilnehmer, insbesondere eine weitere mobile Station, des Telekommunikationsnetzes signalisiert wird. Auf diese Weise ist eine Signalisierung der ermittelten mobilen Station entfernungsunabhängig, also in beliebigem Abstand von der ermittelten mobilen Station möglich.

Ein weiterer Vorteil besteht darin, daß von dem Teilnehmer des Telekommunikationsnetzes das geographische Gebiet, der mindestens eine Dienst und die mindestens eine Eigenschaft vorgegeben werden, daß eine Mitteilung über das vorgegebene geographische Gebiet, den mindestens einen vorgegebenen Dienst und die mindestens eine vorgegebene Eigenschaft über das Telekommunikationsnetz an einen den mindestens einen vorgegebenen Dienst anbietenden Diensteanbieter übertragen wird, daß vom Diensteanbieter über das Telekommunikationsnetz eine mobile, an dem mindestens einen vorgegebenen Dienst teilnehmende Station ermittelt wird, die sich im vorgegebenen geographischen Gebiet aufhält, und die mindestens eine vorgegebene Eigenschaft aufweist, und daß die ermittelte Station vom Diensteanbieter über das Telekommunikationsnetz, vorzugsweise mittels einer Textnachricht, dem Teilnehmer signalisiert wird. Auf diese Weise läßt sich das gesamte erfindungsgemäße Verfahren besonders einfach und entfernungsunabhängig über ein bestehendes Telekommunikationsnetz realisieren, dessen Funktionalität dadurch erhöht wird.

Ein weiterer Vorteil besteht darin, daß mit der Signalisierung weitere Daten, insbesondere eine Position und eine Identität der ermittelten mobilen Station an den Teilnehmer übertragen werden. Auf diese Weise wird der Teilnehmer nicht nur über die Existenz der ermittelten mobilen Station informiert, vielmehr wird ihm durch die zusätzlich übermittelten Informationen die Möglichkeit gegeben, mit der ermittelten mobilen Station in Verbindung zu treten.

Ein weiterer Vorteil besteht darin, daß an mindestens eine an dem mindestens einen vorgegebenen Dienst teilnehmende ermittelte mobile Station mit der mindestens einen vorgegebenen Eigenschaft in dem vorgegebenen geographischen Gebiet eine Nachricht, insbesondere vom Teilnehmer, über das Telekommunikationsnetz übertragen wird. Auf diese Weise kann die ermittelte mobile Station besonders einfach und schnell kontaktiert und über den Suchvorgang informiert werden.

Ein weiterer Vorteil besteht darin, daß das geographische Gebiet vom Teilnehmer des Telekommunikationsnetzes als Abstand vorgegeben wird, wobei sich das vorgegebene geographische Gebiet richtungsunabhängig vom Teilnehmer des Telekommunikationsnetzes ausgehend über den vorgegebenen Abstand erstreckt. Auf diese Weise läßt sich mit einem einzigen Parameter eine Umgebung des Teilnehmers schnell und einfach kreisflächenförmig vorgeben, wobei der Teilnehmer den Mittelpunkt der Kreisfläche darstellt.

Ein weiterer Vorteil besteht darin, daß die Eigenschaften der an dem mindestens einen vorgegebenen Dienst teilnehmenden mobilen Stationen in einer Datenbank des Diensteanbieters abgespeichert werden. Auf diese Weise können die Eigenschaften speicherplatzsparend zentral abgelegt und verfügbar gemacht werden.

### Zeichnung

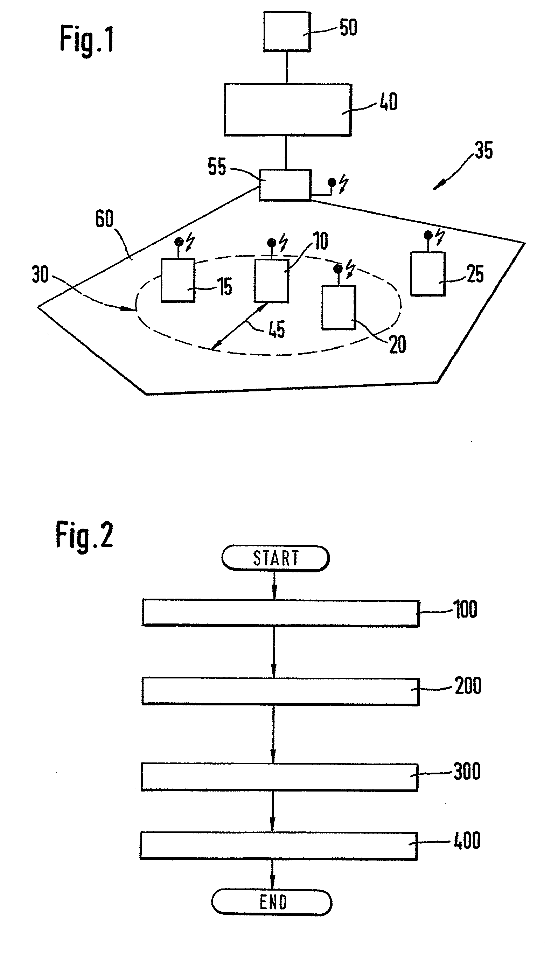

Ein Ausführungsbeispiel der Erfindung ist in der Zeichnung dargestellt und in der nachfolgenden Beschreibung näher erläutert. Es zeigen Figur 1 einen Diensteanbieter in einem mobilen Telekommunikationsnetz und Figur 2 einen Ablaufplan für die Darstellung des erfindungsgemäßen Verfahrens.

### Beschreibung des Ausführungsbeispiels

In Figur 1 kennzeichnet 35 ein mobiles
Telekommunikationsnetz mit einer Basisstation 55, an die ein Diensteanbieter 40 angeschlossen ist. An den Diensteanbieter 40 ist auch eine Datenbank 50 angeschlossen. Die Basisstation 55 spannt eine Funkzelle 60 auf, in der eine erste mobile Station 10, eine zweite mobile Station 15, eine dritte mobile Station 20 und eine vierte mobile Station 25 als Teilnehmer des mobilen Telekommunikationsnetzes 35 angeordnet sind. Es können auch mehrere Basisstationen vorgesehen sein, die jeweils eine Funkzelle aufspannen und miteinander verbunden sind, wobei an eine der Basisstationen dann der Diensteanbieter 40 mit der Datenbank 50 angeschlossen ist. Die mobilen Stationen 10, 15, 20, 25 können sich dann, in den verschiedenen Funkzellen des Telekommunikationsnetzes 35 aufhalten und miteinander über die Basisstationen und mit dem Diensteanbieter 40 kommunizieren. Die Kommunikation zwischen der Basisstation 55 und den mobilen Stationen 10, 15, 10, 25 erfolgt, wie in Figur 1 dargestellt, über Funk. In Figur 2 ist die Funktionsweise des erfindungsgemäßen Verfahrens mittels eines Ablaufplans dargestellt. Dabei wird in einem ersten Schritt 100 ein vom Diensteanbieter 40 angebotener Dienst und ein innerhalb des Telekommunikationsnetzes 35 liegendes geographisches Gebiet 30 ausgewählt und vorgegeben. Gemäß Figur 1 wird das geographische Gebiet 30 innerhalb der Funkzelle 60 ausgewählt und vorgegeben. Es kann auch mehr als ein Dienst beim Diensteanbieter 40 ausgewählt und vorgegeben werden. Im folgenden soll beispielhaft als Dienst ein Mitfahrgelegenheits-Such-Service ausgewählt und vorgegeben werden, der vom Diensteanbieter 40 für die mobilen Stationen 10, 15, 20, 25 angeboten wird. Die Auswahl des Dienstes und des geographischen Gebietes 30 kann beim Diensteanbieter 40 direkt, beispielsweise über eine Tastatur erfolgen. Sie kann aber auch von einer der mobilen Stationen 10, 15, 20, 25, beispielsweise ebenfalls über eine Tastatur eingeleitet werden. Im hier beschriebenen Ausführungsbeispiel sollen der Mitfahrgelegenheits-Such-Service und das geographische Gebiet 30 von der ersten mobilen Station 10 als einem Teilnehmer des Telekommunikationsnetzes 35 vorgegeben werden. Dabei kann als geographisches Gebiet 30 jedes beliebige über das Telekommunikationsnetz 35 erreichbare Gebiet von der ersten mobilen Station 10 ausgewählt werden. Das ausgewählte geographische Gebiet 30 kann dabei beispielsweise auch in einem mit dem mobilen Telekommunikationsnetz 35 gekoppelten Festnetz liegen.

Das geographische Gebiet 30 kann von der ersten mobilen Station 10 besonders einfach dadurch vorgegeben werden, indem die erste mobile Station 10 einen Abstand 45 über das Telekommunikationsnetz 35 und die Basisstation 55 an den Diensteanbieter 40 übermittelt, wobei der Abstand 45 vom Diensteanbieter 40 als Radius interpretiert wird. Das geographische Gebiet 30 ist dann als Kreisfläche mit dem Abstand 45 als Radius und der ersten mobilen Station 10 als Kreisflächenmittelpunkt vorgegeben.

An dem ausgewählten Dienst des Mitfahrgelegenheits-Such-Service nehmen alle vier mobilen Stationen 10, 15, 20, 25 teil. Das bedeutet, daß in der Datenbank 50 von allen vier mobilen Stationen 10, 15, 20, 25 diesen Dienst betreffende Daten abgelegt sind, die in der nachfolgend aufgeführten Tabelle dargestellt sind.

| mobile Station | Fahrtziel | Abfahrtszeit | Rufnummer | Nutzungsart |
|---|---|---|---|---|
| 10 | Hamburg | 15:00 | +49 172 123456 | Gesuch |
| 15 | Hamburg | 15:00 | +49 172 123457 | Angebot |
| 20 | Berlin | 15:00 | +49 172 123458 | Angebot |
| 25 | Hamburg | 15:00 | +49 172 123459 | Angebot |

In der Tabelle sind den mobilen Stationen 10, 15, 20, 25 jeweils vier Eigenschaften für den Mitfahrgelegenheits-Such-Service zugeordnet. Eine erste Eigenschaft definiert dabei ein Fahrtziel, eine zweite Eigenschaft eine Abfahrtszeit, eine dritte Eigenschaft eine Rufnummer und eine vierte Eigenschaft eine Nutzungsart des Mitfahrgelegenheits-Such-Service. So ist der ersten mobilen Station 10 als Fahrtziel Hamburg, als Abfahrtszeit 15.00 Uhr, als Rufnummer +49 172 123456 und als Nutzungsart "Gesuch" zugeordnet. Der zweiten mobilen Station 15 ist als Fahrtziel Hamburg, als Abfahrtszeit 15.00 Uhr, als Rufnummer + 49 172 123457 und als Nutzungsart "Angebot" zugeordnet. Der dritten mobilen Station 20 ist als Fahrtziel Berlin, als Abfahrtszeit 15.00 Uhr, als Rufnummer +49 172 123458 und als Nutzungsart "Angebot" zugeordnet. Der vierten mobilen Station 25 ist als Fahrtziel Hamburg, als Abfahrtszeit 15.00 Uhr, als Rufnummer + 49 172 123459 und als Nutzungsart "Angebot" zugeordnet. Die erste mobile Station 10 bzw. deren Benutzer sucht also eine Mitfahrgelegenheit nach Hamburg für eine Abfahrt um 15.00 Uhr. Dazu wird im ersten Schritt 100 auch noch mindestens eine Eigenschaft des mindestens einen ausgewählten Dienstes ausgewählt und vorgegeben, wobei diese Auswahl und Vorgabe direkt beim Diensteanbieter 40, wie beschrieben, erfolgen kann. Im hier beschriebenen Ausführungsbeispiel wird jedoch die mindestens eine Eigenschaft an der ersten mobilen Station 10 vorgegeben. Als Eigenschaften werden dabei in dem hier beschriebenen Ausführungsbeispiel von der ersten mobilen Station 10 das Fahrtziel Hamburg, die Abfahrtszeit 15.00 Uhr, seine Rufnummer +49 172 123456 und die Nutzungsart "Gesuch" angegeben.

Anschließend wird eine Mitteilung über den vorgegebenen Abstand 45, den ausgewählten Mitfahrgelegenheits-Such-Service und die vier genannten vorgegebenen Eigenschaften über das Telekommunikationsnetz 35 und die Basisstation 55 an den den Mitfahrgelegenheits-Such-Service anbietenden Diensteanbieter 40 übertragen.

Beispielsweise durch eine Feldstärkemessung der durch die Basisstation 55 empfangenen Informationen ermittelt der Diensteanbieter 40 die Positon der ersten mobilen Station 10 in der Funkzelle 60 als Mittelpunkt des über den Abstand 45 vorgegebenen kreisflächenförmigen geographischen Gebietes 30. Der Diensteanbieter 40 erkennt anhand der über die Basisstation 55 empfangenen Informationen, daß die erste mobile Station 10 als Dienst den Mitfahrgelegenheits-Such-Service ausgewählt hat und legt die an der ersten mobilen Station 10 vorgegebenen und an die Basisstation 55 übertragenen Eigenschaften in der Datenbank 50 gemäß der Tabelle ab.

In einem zweiten Schritt 200 ermittelt der Diensteanbieter 40 über die Tabelle in der Datenbank 50 sämtliche an dem mindestens einen ausgewählten Dienst des
Mitfahrgelegenheits-Such-Service teilnehmenden mobilen Stationen 10, 15, 20, 25 und prüft anschließend, welche dieser mobilen Stationen 10, 15, 20, 25 in dem an der ersten mobilen Station 10 vorgegebenen geografischen Gebiet 30 liegen. Dazu kann beispielsweise durch Austausch von Signalisierungsinformationen zwischen der Basisstation 55 und den einzelnen Stationen 10, 15, 20, 25 für jede mobile Station 10, 15, 20, 25 eine Empfangsfeldstärke in der Basisstation 55 ermittelt werden, die eine Lokalisierung der einzelnen Stationen 10, 15, 20, 25 in der Funkzelle 60 ermöglicht. Eine genauere Positionierung ist dabei möglich, wenn zusätzlich die Positionierung der mobilen Stationen 10, 15, 20, 25 auf entsprechende Weise bezüglich einer oder mehrerer benachbarter Basisstationen ermittelt wird, so daß eine zweidimensionale Positionierung der mobilen Stationen 10, 15, 20, 25 in der Funkzelle 60 möglich wird. Dieselbe Vorgehensweise empfiehlt sich auf für die Lokalisierung der ersten mobilen Station 10 zur Ermittlung des Mittelpunktes des vorgegebenen kreisflächenförmigen geographischen Gebietes 30. Gemäß Figur 1 ermittelt im zweiten Schritt 200 der Diensteanbieter 40, daß die erste mobile Station 10, die zweite mobile Station 15 und die dritte mobile Station 20 im vorgegebenen geographischen Gebiet 30 angeordnet sind.

In einem dritten Schritt 300 prüft der Diensteanbieter 40 für jede der im vorgegebenen geographischen Gebiet 30 ermittelten mobilen Stationen 10, 15, 20, ob ihre in der Datenbank 50 gemäß der Tabelle abgelegten Eigenschaften zu den durch die erste mobile Station 10 vorgegebenen Eigenschaften passen. Dabei ermittelt der Diensteanbieter 40 lediglich die zweite mobile Station 15, bei der die Nutzungsart "Angebot" zur Nutzungsart "Gesuch" der ersten mobilen Station 10 paßt und deren Fahrtziel und Abfahrtszeit mit den entsprechend durch die erste mobile Station 10 vorgegebenen Eigenschaften übereinstimmen.

Der Diensteanbieter 40 signalisiert anschließend in einem vierten Schritt 400 die ermittelte zweite mobile Station 15. Wurde der Suchvorgang direkt beim Diensteanbieter 40 eingeleitet, so erfolgt die Signalisierung auch direkt beim Diensteanbieter 40. In dem hier beschriebenen Ausführungsbeispiel wurde der Suchvorgang von der ersten mobilen Station 10 eingeleitet, so daß der Diensteanbieter 40 die ermittelte zweite mobile Station 15 der ersten mobilen Station 10 über das Telekommunikationsnetz 35 signalisiert. Die Signalisierung kann dabei beispielsweise mittels einer Textnachricht, insbesondere nach dem Short Message Service (SMS) realisiert sein. Es sind aber auch Anrufe mit automatischer Ansage, Fax-Sendungen oder E-Mail-Nachrichten denkbar. Mit der Signalisierung können auch weitere Daten, insbesondere die durch die beschriebenen Feldstärkemessungen ermittelte Position und anhand der in der Datenbank 50 abgespeicherten Rufnummer die Identität der ermittelten zweiten mobilen Station 15 vom Diensteanbieter 40 über die Basisstation 55 an die erste mobile Station 10 übertragen werden. Der Benutzer der ersten mobilen Station 10 hat somit die Möglichkeit, entweder über das Telekommunikationsnetz 35 oder direkt durch Aufsuchen der Position der zweiten mobilen Station 15 mit dem Benutzer der zweiten mobilen Station 15 in Kontakt zu kommen. Diese Kontaktaufnahme kann auch dadurch erleichtert werden, daß der Diensteanbieter 40 über die Basisstation 55 auch an die ermittelte zweite mobile Station 15 eine Nachricht über das Telekommunikationsnetz 35 übertragen kann, die den Benutzer der zweiten mobilen Station 15 darüber informiert, daß er von einem anderen Teilnehmer des Telekommunikationsnetzes 35 als Suchziel ermittelt wurde. Bei dieser Nachricht kann es sich ebenfalls um eine Textnachricht, einen Anruf mit automatischer Anlage, eine Fax-Sendung, eine E-Mail-Nachricht oder dergleichen handeln. Zusätzlich kann die zweite mobile Station 15 in der beschriebenen Weise über die Position und die Identität der den Suchvorgang auslösenden ersten mobilen Station 10 informiert werden.

Die mobilen Stationen 10, 15, 20, 25 können beispielsweise als Mobilfunkgeräte, als Schnurlostelefone, als Handfunkgeräte oder dergleichen ausgebildet sein.

Das erfindungsgemäße Verfahren ermöglicht es dem Diensteanbieter 40 gezielt zu signalisieren, wenn ein durch bestimmte Eigenschaften gekennzeichneter Mobilfunkteilnehmer ein bestimmtes geographisches Gebiet betritt. Dieses Gebiet kann dabei durch die Position eines Dienstnutzers wie beschrieben selbst definiert sein, insbesondere wenn auch er ein Mobilfunkteilnehmer ist.

Das beschriebene erfindungsgemäße Verfahren zur Identifizierung mindestens einer an mindestens einem vorgegebenen Dienst teilnehmenden mobilen Station 10, 15, 20, 25 mit mindestens einer vorgegebenen Eigenschaft innerhalb eines vorgegebenen geographischen Gebietes 30 kann jedoch auch von einem Teilnehmer eines vom mobilen Teiekommunikationsnetz 35 verschiedenen weiteren Telekommunikationsnetzes, beispielsweise einem Festnetz, das mit dem mobilen Telekommunikationsnetz 35 gekoppelt ist, eingeleitet werden, wobei dieser Teilnehmer dann das geographische Gebiet 30, den mindestens einen Dienst und die mindestens eine Eigenschaft vorgeben kann. Eine Mitteilung über das vorgegebene geographische Gebiet 30, den mindestens einen vorgegebenen Dienst und die mindestens eine vorgegebene Eigenschaft werden dann über die miteinander verbundenen bzw. gekoppelten Telekommunikationsnetze an den Diensteanbieter 40 zur Weiterverarbeitung übertragen. Umgekehrt erfolgt die vom Diensteanbieter 40 eingeleitete Signalisierung einer ermittelten mobilen Station ebenfalls über die miteinander verbundenen bzw. gekoppelten Telekommunikationsnetze bei dem Teilnehmer, der den Suchvorgang eingeleitet hatte.

Der als Ausführungsbeispiel beschriebene Dienst des Mitfahrgelegenheits-Such-Service ist nur beispielhaft ausgeführt. Das erfindungsgemäße Verfahren ist auf beliebige andere Dienste mit beliebigen anderen Eigenschaften anwendbar, wobei für den Suchvorgang von den dem jeweiligen Dienst zugeordneten Eigenschaften beliebige Eigenschaften als Suchkriterium vorgegeben werden können.

Führt der Suchvorgang nicht zum Erfolg, d.h. wird im vorgegebenen geographischen Gebiet 30 keine mobile Station, die an dem mindestens einen vorgegebenen Dienst teilnimmt und die mindestens eine vorgegebene Eigenschaft aufweist, gefunden, so kann der Suchvorgang automatisch so lange wiederholt werden, bis eine mobile Station, die an dem mindestens einen vorgegebenen Dienst teilnimmt und die mindestens eine vorgegebene Eigenschaft aufweist, in das vorgegebene geographische Gebiet 30 eintritt und deren Postition innerhalb des vorgegebenen geographischen Gebietes 30 vom Diensteanbieter 40 ermittelt wird. Es kann aber auch vorgesehen sein, den Suchvorgang nach einer vorgegebenen Zeit abzubrechen und eine entsprechende Mitteilung an den den Suchvorgang auslösenden Teilnehmer des mobilen Telekommunikationsnetzes 35 oder eines mit dem mobilen Telekommunikationsnetz 35 gekoppelten Telekommunikationsnetzes zu übertragen.

Als Dienst für die mobilen Stationen 10, 15, 20, 25 kann auch ein Kontaktvermittlungs-Service vom Diensteanbieter 40 angeboten werden. Die Datenbank 50 enthält dann entsprechend die Eigenschaften und Wünsche eines jeden Dienstnutzers und vergleicht benachbarte Nutzer auf eine Übereinstimmung dieser Eigenschaften und Wünsche. Wird diese Übereinstimmung gefunden, können die Dienstnutzer durch jeweils eine entsprechende Signalisierung benachrichtigt werden.

Das erfindungsgemäße Verfahren kann auch dann angewendet werden, wenn mehrere Dienste vorgegeben werden. So kann der Kontaktvermittlungs-Service mit dem Mitfahrgelegenheits-Such-Service verknüpft werden, so daß nur solche Mitfahrgelegenheiten ermittelt werden, bei denen abgesehen von Fahrtziel und Abfahrtzeit auch Eigenschaften und Wünsche der entsprechenden Dienstnutzer übereinstimmen.

Bevorzugte Ausführungsformen der vorliegenden Erfindung ergeben sich aus den folgenden Aspekten:
1. Verfahren zur Identifzierung mindestens einer an mindestens einem vorgegebenen Dienst teilnehmenden mobilen Station (10, 15, 20, 25), insbesondere eines Mobilfunkgerätes, mit mindestens einer vorgegebenen Eigenschaft innerhalb eines vorgegebenen geographischen Gebietes (30), **dadurch gekennzeichnet, dass** in einem ersten Schritt (100) das geographische Gebiet (30), der mindestens eine Dienst und die mindestens eine Eigenschaft vorgegeben werden, dass in einem zweiten Schritt (200) sämtliche an dem mindestens einen vorgegebenen Dienst teilnehmenden mobilen Stationen (10, 15, 20) in dem geographischen Gebiet (30) über ein Telekommunikationsnetz (35) ermittelt werden, dass in einem dritten Schritt (300) für jede der ermittelten mobilen Stationen (10, 15, 20) geprüft wird, ob sie die mindestens eine vorgegebene Eigenschaft aufweist, und dass in einem vierten Schritt (400) nur dann eine ermittelte mobile Station (15) signalisiert wird, wenn sie die mindestens eine vorgegebene Eigenschaft aufweist.
2. Verfahren nach Aspekt 1, **dadurch gekennzeichnet, dass** eine in dem vierten Schritt (400) sich ergebende mobile Station (15) mit der mindestens einen vorgegebenen Eigenschaft an einen Teilnehmer (10), insbesondere eine weitere mobile Station, des Telekommunikationsnetzes (35) signalisiert wird.
3. Verfahren nach Aspekt 1 oder 2, **dadurch gekennzeichnet, dass** von dem Teilnehmer (10) des Telekommunikationsnetzes (35) das geographische Gebiet (30), der mindestens eine Dienst und die mindestens eine Eigenschaft vorgegeben werden, dass eine Mitteilung über das vorgegebene geographische Gebiet (30), den mindestens einen vorgegebenen Dienst und die mindestens eine vorgegebene Eigenschaft über das Telekommunikationsnetz (35) an einen den mindestens einen vorgegebenen Dienst anbietenden Diensteanbieter (40) übertragen wird, dass vom Diensteanbieter (40) über das Telekommunikationsnetz (35) eine mobile, an dem mindestens einen vorgegebenen Dienst teilnehmende Station (15) ermittelt wird, die sich im vorgegebenen geographischen Gebiet (30) aufhält und die mindestens eine vorgegebene Eigenschaft aufweist, und dass die ermittelte mobile Station (15) vom Diensteanbieter (40) über das Telekommunikationsnetz (35), vorzugsweise mittels einer Textnachricht, dem Teilnehmer (10) signalisiert wird.
4. Verfahren nach Aspekt 3, **dadurch gekennzeichnet, dass** mit der Signalisierung weitere Daten, insbesondere eine Position und eine Identität der ermittelten mobilen Station (15) an den Teilnehmer (10) übertragen werden.
5. Verfahren nach einem der vorherigen Aspekte, **dadurch gekennzeichnet, dass** an mindestens eine an dem mindestens einen vorgegebenen Dienst teilnehmende ermittelte mobile Station (15) mit der mindestens einen vorgegebenen Eigenschaft in dem vorgegebenen geographischen Gebiet (30) eine Nachricht über das Telekommunikationsnetz (35) übertragen wird.
6. Verfahren nach einem der Aspekte 3, 4 oder 5, **dadurch gekennzeichnet, dass** das geographische Gebiet (30) vom Teilnehmer (10) des Telekommunikationsnetzes (35) als Abstand (45) vorgegeben wird, wobei sich das vorgegebene geographische Gebiet (30) richtungsunabhängig vom Teilnehmer (10) des Telekommunikationsnetzes (35) ausgehend über den vorgegebenen Abstand (45) erstreckt.
7. Verfahren nach einem der vorherigen Aspekte, **dadurch gekennzeichnet, dass** als Dienst für den Teilnehmer (10) und/oder für die mobilen Stationen (15, 20, 25) ein Mitfahrgelegenheits-Such-Service angeboten wird, bei dem als Eigenschaften ein Zielort und eine Uhrzeit vorgesehen sind.
8. Verfahren nach einem der vorherigen Aspekte, **dadurch gekennzeichnet, dass** als Dienst für den Teilnehmer (10) und/oder für die mobilen Stationen (15, 20, 25) ein Kontaktvermittlungs-Service angeboten wird.
9. Verfahren nach einem der vorherigen Aspekte, **dadurch gekennzeichnet, dass** die Eigenschaften der an dem mindestens einen vorgegebenen Dienst teilnehmenden mobilen Stationen (15, 20, 25) in einer Datenbank (50) des Diensteanbieters (40) abgespeichert werden.

## Patentansprüche

1. Verfahren zur Identifizierung mindestens einer an mindestens einem von einem Diensteanbieter (40) angebotenen Dienst teilnehmenden mobilen Station (10, 15, 20, 25) mit mindestens einer Eigenschaft innerhalb eines vorgegebenen geographischen Gebiets (30) innerhalb eines Telekommunikationsnetzes (35), **dadurch gekennzeichnet, dass**:
- in einem ersten Schritt (100) das geographische Gebiet (30), der mindestens eine Dienst und die mindestens eine Eigenschaft vorgegeben werden durch einen Benutzer einer ersten der an dem mindestens einen Dienst teilnehmenden mobilen Stationen (10, 15, 20, 25) und/oder den Diensteanbieter (40) des mindestens einen Dienstes;
- in einem zweiten Schritt (200) an dem mindestens einen Dienst teilnehmende mobile Stationen (10, 15, 20, 25) innerhalb des geographischen Gebiets (30) mittels des Telekommunikationsnetzes (35) ermittelt werden durch den Diensteanbieter (40);
- in einem dritten Schritt (300) ermittelt wird, ob die an dem mindestens einen Dienst teilnehmenden mobilen Stationen (10, 15, 20, 25) innerhalb des geographischen Gebiets (30) die mindestens eine vorgegebene Eigenschaft aufweisen; und dass
- in einem vierten Schritt (400) die ermittelte an dem mindestens einen Dienst teilnehmende mobile Station (15) signalisiert wird, wenn sie die mindestens eine vorgegebene Eigenschaft aufweist;
wobei das Verfahren von jeder der an dem mindestens einen Dienst teilnehmenden mobilen Stationen (10, 15, 20, 25) eingeleitet werden kann.

2. Verfahren nach Anspruch 1, wobei in dem ersten Schritt (100) das geographische Gebiet (30) durch einen Abstand (45) von der ersten der an dem mindestens einen Dienst teilnehmenden mobilen Stationen (10, 15, 20, 25) vorgegeben wird, und wobei der Abstand (45) als Mitteilung über das Telekommunikationsnetz (35) und eine Basisstation (55) an den Diensteanbieter (40) des mindestens einen Dienstes übertragen wird.

3. Verfahren nach Anspruch 1 oder 2, wobei der zweite Schritt (200) weiter umfasst:
- Messen einer Empfangsfeldstärke in der Basisstation (55) und/oder bezüglich einer oder mehrerer benachbarter Basisstationen zur Lokalisierung der an dem mindestens einen Dienst teilnehmenden mobilen Stationen (10, 15, 20, 25) in einer Funkzelle (60);
- Ermitteln, welche der an dem mindestens einen Dienst teilnehmenden mobilen Stationen (10,15, 20, 25) in dem geographischen Gebiet (30) liegen durch den Diensteanbieter (40) aufgrund der gemessenen Empfangsfeldstärke.

4. Verfahren nach einem der Ansprüche 1 bis 3, wobei das Signalisieren der ermittelten an dem mindestens Dienst teilnehmenden mobilen Station (15) an die erste der an dem mindestens einen Dienst teilnehmenden mobilen Stationen (10, 15, 20, 25) durch den Diensteanbieter (40) über das Telekommunikationsnetz (35) erfolgt.

5. Verfahren nach einem der Ansprüche 1 bis 4, wobei das Signalisieren der ersten der an dem mindestens einen Dienst teilnehmenden mobilen Stationen (10, 15, 20, 25) von dem Diensteanbieter (40) über die Basisstation (55) an die ermittelte an dem mindestens einen Dienst teilnehmende mobile Station (15) des Telekommunikationsnetzes (35) erfolgt.

6. Verfahren nach einem der Ansprüche 1 bis 5, wobei das Signalisieren mittels einer Textnachricht, insbesondere nach dem Short Message Service, mittels Anruf mit automatischer Ansage, Fax-Sendung oder Email-Nachricht realisiert ist.

7. Verfahren nach einem der Ansprüche 1 bis 6, wobei mit dem Signalisieren weitere Daten, insbesondere eine Position und eine Identität der ermittelten an dem mindestens einen Dienst teilnehmenden mobilen Station (10, 15, 20, 25) des Telekommunikationsnetzes (35) an die erste der an dem mindestens einen Dienst teilnehmenden mobilen Stationen (10, 15, 20, 25) übertragen werden und umgekehrt.

8. Verfahren nach einem der Ansprüche 1 bis 7, wobei die an dem mindestens einen Dienst teilnehmenden Stationen (10, 15, 20, 25) als Mobilfunkgeräte, Schnurlostelefone oder Handfunkgeräte ausgebildet sind.

9. Verfahren nach einem der Ansprüche 1 bis 8, wobei das Verfahren von einem Teilnehmer eines von dem mobilen Telekommunikationsnetz (35) verschiedenen Telekommunikationsnetz, das mit dem mobilen Telekommunikationsnetz (35) gekoppelt ist, eingeleitet werden kann, wobei der Teilnehmer des Telekommunikationsnetzes das geographische Gebiet (30), den mindestens einen Dienst und die mindestens eine Eigenschaft vorgibt.

10. Verfahren nach einem der Ansprüche 1 bis 9, wobei das Verfahren nach einer vorgegebenen Zeit abbricht, sofern in dem geographischen Gebiet (30) keine mobile Station an dem mindestens einen vorgegebenen Dienst teilnimmt und die mindestens eine Eigenschaft aufweist.

11. Verfahren nach Anspruch 10, wobei eine Mitteilung an die erste der an dem mindestens einen Dienst teilnehmenden mobilen Stationen (10, 15, 20, 25) versandt wird.

12. Verfahren nach Anspruch 10, wobei eine Mitteilung an den Teilnehmer eines von dem mobilen Telekommunikationsnetz (35) verschiedenen Telekommunikationsnetzes, das mit dem mobilen Telekommunikationsnetz (35) gekoppelt ist, versandt wird, sofern der Teilnehmer das Verfahren eingeleitet hat.

13. Verfahren nach einem der Ansprüche 1 bis 12, wobei der mindestens eine Dienst einen Kontaktvermittlungs-Service oder einen Mitfahrgelegenheits-Such-Service des Diensteanbieters (40) umfasst.
